# EUROPEAN PATENT SPECIFICATION

(11) **EP 3 280 190 B1**
(45) Date of publication and mention of the grant of the patent: **19.06.2019**
(21) Application number: 16182304.2
(22) Date of filing: 02.08.2016
(51) Int. Cl.: H04W 48/18

(54) **METHOD, HOME LOCATION ENTITY, MOBILITY MANAGEMENT ENTITY AND SYSTEM FOR MANAGING COMMUNICATION SERVICES OF A ROAMING USER EQUIPMENT IN A VISITED FIRST MOBILE COMMUNICATION NETWORK, PROGRAM AND COMPUTER PROGRAM PRODUCT**
VERFAHREN, HEIMSTANDORTEINHEIT, MOBILITÄTSVERWALTUNGSEINRICHTUNG UND SYSTEM ZUR VERWALTUNG VON KOMMUNIKATIONSDIENSTEN EINES ROAMING-BENUTZERGERÄTS IN EINEM ERSTEN BESUCHTEN MOBILFUNKNETZWERK, PROGRAMM UND COMPUTERPROGRAMMPRODUKT
PROCÉDÉ, ENTITÉ DE LOCALISATION NOMINAL, ENTITÉ DE GESTION DE MOBILITÉ ET SYSTÈME DE GESTION DE SERVICES DE COMMUNICATION D'UN ÉQUIPEMENT UTILISATEUR ITINÉRANT DANS UN PREMIER RÉSEAU DE COMMUNICATION MOBILE, PROGRAMME ET PRODUIT DE PROGRAMME INFORMATIQUE

(43) Date of publication of application: 07.02.2018
(73) Proprietor: Deutsche Telekom AG, 53113 Bonn (DE)
(72) Inventor: NEGM, Mohamed, 53225 Bonn (DE)
(74) Representative: Schwöbel, Thilo K.

(56) References cited:
- WO-A1-2012/095197
- WO-A1-2016/034199

## Description

### BACKGROUND

The present invention relates a method for managing communication services of a roaming user equipment in a visited first mobile communication network, wherein the user equipment being connected to the first mobile communication network requests a network connection to a gateway in a second mobile communication network using an access point name for one or several certain communication services and wherein a mobility management entity of the first mobile communication network communicates with a home location entity of the second mobile communication network in order to establish the requested network connection.

Furthermore, the present invention relates to a home location entity for managing communication services of a roaming user equipment in a visited first mobile communication network, wherein the home location entity is part of a second mobile communication network, wherein the second mobile communication network is acting as a home mobile communication network for the user equipment roaming in the visited first mobile communication network.

Furthermore, the present invention relates to a mobility management entity for managing communication services of a roaming user equipment in a visited first mobile communication network, wherein the mobility management entity is part of the first mobile communication network.

Furthermore, the present invention relates to a system for managing communication services of a roaming user equipment in a visited first mobile communication network, wherein the system comprises the first mobile communication network, a second mobile communication network and the user equipment, wherein the user equipment being connected to the first mobile communication network requests a network connection to a gateway in a second mobile communication network using an access point name for one or several certain communication services, wherein the second mobile communication network is acting as a home communication network for the user equipment roaming in the visited first mobile communication network, wherein a mobility management entity of the first mobile communication network communicates with a home location entity of the second mobile communication network in order to establish the requested network connection.

Furthermore, the present invention relates to a program and to a computer program product for managing communication services of a roaming user equipment in a visited first mobile communication network.

WO 2012/095197 A1 discloses a method for allowing a user equipment to use multimedia services in a visited communication network. Nowadays, the number of smartphone users is strongly increasing. Smartphones typically provide more and more specific communication services, e.g. VoLTE (Voice over IP over LTE). These communication services use predefined Access Point Names (APN) in the IP Multimedia Subsystem (IPS) for signaling traffic and in order to establish a network connection for a certain communication service.

If a user equipment requests a network connection for a certain communication service while roaming in a visited mobile communication network and not being directly connected to its home mobile communication network, the traffic from the user equipment is travelling from the visited mobile communication network towards the home mobile communication network in order to reach the gateways in the home mobile communication network with the corresponding access point name. If an operator wants to have certain services restricted while roaming for the subscribers, this will be controlled by rules (e.g. by policy and charging rules, PCRF) on the gateway in the home mobile communication network based in the mobile network code (MNC) and the mobile country code (MCC) or even local configurations on the home gateway to block or just drop the packets of the requested service for the user equipment while roaming.

Disadvantageously, a mobility management entity (MME or SGSN (Serving GPRS Support node)) of the visited mobile communication network does not know, whether a certain communication service requested by the roaming user equipment is allowed and will be supported by the gateway in the home mobile communication network while roaming or not. Consequently, signaling traffic from the user equipment is over and over again communicated from the visited mobile communication network to the home mobile communication network, even if the packets of the requested services will only be dropped by the gateway in the home mobile communication network because the requested service is not allowed while roaming and therefore blocked.

A disadvantage of this approach is that unnecessary and useless signaling on the home gateway is caused. Furthermore, charges on the home mobile communication network are introduced as all traffic is routed via the visited mobile communication network to the home mobile communication network, although the home mobile communication is not charging from the user of the user equipment because the requested communication service is blocked while roaming.

An example, VoLTE service comes with a predefined access point name in the user equipment and the user equipment roaming in a visited mobile communication network tries to use this access point name for signaling traffic within the IP Multimedia Subsystem of the home mobile communication network. If VoLTE is not enabled for roaming in the visited mobile communication network, the user equipment keep trying to send the signaling traffic towards the home packet gateway (until appropriate response is received. If the gatrway is blocking the signaling by simply dropping the packets (because VoLTE is not allowed while roaming), the user equipment will keep trying again and again causing unnecessary signaling on the gateway and not chargeable extra charges in the home mobile communication network.

Currently, there are only two known mechanisms to restrict communication services while roaming: The mobility management entity of the visited mobile communication network can be configured to block all traffic from being used or the home location entity of the home mobile communication network can instruct the mobile mobility entity of the visited mobile communication network to disable the user equipment from accessing the visited mobile communication network. Disadvantageously, in the first case, all data services are blocked for the user equipment in the visiting mobile communication network and, in the second case, roaming is blocked for the user equipment in the visiting mobile communication network, at all.

Both approaches are unsatisfactory as providing and/or blocking individually selected certain communication services for a certain user equipment while roaming without causing unnecessary signaling on the gateway and not chargeable extra charges in the home mobile communication network is not possible.

### SUMMARY

It is an object of the present invention to provide a method for managing communication services of a roaming user equipment in a visited first mobile communication network that enables providing and/or blocking individually selected certain communication services for the user equipment while roaming in the visited first mobile communication network without causing unnecessary signaling on the gateway in the home mobile communication network and not chargeable extra charges in the home mobile communication network.

The object of the present invention is achieved by a method according to claim 1.

It is thereby advantageously possible according to the present invention that certain communication services are allowed or blocked already by the mobility management entity of the visited first mobile communication network in order to avoid unnecessary and useless signaling and charges in the second mobility network. In particular, unnecessary signaling on the target gateway in the second mobility network can be avoided. Furthermore, the second mobile communication network is prevented from extra charges caused by the unnecessary signaling routed via the visited first mobile communication network to the second mobile communication network. This is accomplished in that the access point name configuration identifier comprises information determining whether a certain communication service is allowed or not allowed while roaming in the first mobile communication network. This access point name configuration identifier is communicated from the second mobile communication network to the first mobile communication network, so that the mobility management entity of the second mobile communication network can autonomously decide whether signaling in connection with a certain communication service shall be routed to the second mobile communication networks or already blocked in the first mobile communication. If the communication service in question is indicated as "not allowed" while roaming in the first mobile communication network, signaling in connection with this communication service is blocked in the first mobile communication network, so that the home gateway in the second mobile communication network is not subjected to the signaling traffic (if the communication service in question is not allowed while roaming). Furthermore, no extra charges are caused by traffic of the restricted communication service because this traffic is not routed from the visited first mobile communication network to the second mobile communication network anymore, but blocked already in the first mobile communication network. The second mobile communication network is particularly acting as a home mobile communication network for the user equipment roaming in the visited first mobile communication network.

The access point name configuration identifier preferably indicates, in general, whether the access point name for the certain communication service is allowed or not allowed in the case that the user equipment is roaming. Alternatively, the access point name configuration identifier indicates location-specific and/or network-specific in which visited mobile communication networks the use of the access point name for the certain communication service is allowed or not allowed. It is therefore conceivable that the access point name configuration identifier comprises a list or table of access point names, country codes and admission parameters, wherein the admission parameter determines for each individual combination of access point name and country code the condition "allowed" or "not allowed".

According to the present invention it is preferred that the mobility management entity establishes the requested network connection, if the access point name configuration identifier indicates that the corresponding access point name is allowed for the user equipment in the first mobile communication network. It is conceivable that the requested network connection is only established in case that the access point name configuration identifier explicitly shows that the access point name is allowed for the user equipment in the visited first mobile communication network. Alternatively, the requested network connection is already established in case that the access point name configuration identifier does not explicitly indicate that the access point name is not allowed for the user equipment in the visited first mobile communication network.

Accordingly, the mobility management entity preferably rejects the requested network connection, if the access point name configuration identifier indicates that the corresponding access point name is not allowed for the user equipment in the first mobile communication network. It is conceivable that the requested network connection is only blocked in case that the access point name configuration identifier explicitly shows that the access point name is not allowed for the user equipment in the visited first mobile communication network. Alternatively, the requested network connection is already blocked in case that the access point name configuration identifier does not explicitly indicate that the access point name is allowed for the user equipment in the visited first mobile communication network.

Optionally, the access point name configuration identifier indicates whether the access point name is allowed or not allowed to be used by the user equipment outside the second mobile communication network. In this case, the permission or refusal of using a certain communication service while roaming does not apply to a certain location or a certain visited mobile communication network but for all visited mobile communication networks.

According to the present invention, the access point name configuration identifier comprises a list of several mobile communication networks and/or a list of several access point names in order to indicate individually in which mobile communication networks apart from the second mobile communication network a certain access point name is allowed or not allowed to be used by the user equipment. In other words, according to an embodiment of the present invention: The access point name configuration identifier contains at least a list of several mobile network communication networks apart from the second mobile communication network which may be applied for roaming by the user equipment and indicates individually for each of those listed mobile network communication networks whether a certain access point name is allowed or not allowed to be used by the user equipment. In this case, the access point name configuration identifier comprises preferably the list or table of access point names, country codes and admission parameters, wherein the admission parameter determines for each individual combination of access point name and country code the condition "allowed" or "not allowed". The mobile management entity of the first mobile communication network receives either the whole list or table of access point names, country codes and admission parameters from the home location entity indicating the admission parameters also for other countries or other mobile communication networks, not involved, or the mobile management entity receives only that part of the list or table of access point names, country codes and admission parameters which relates to the first mobile communication network. In the second case, the data volume to be transmitted from the home location entity to the mobile management entity can advantageously be reduced.

Preferably, the access point name configuration identifier is transmitted together with or as part of an insert-subscriber-data message sent from the home location entity of the second mobile communication network to the mobility management entity of the first mobile communication network, in particular initiated by an update location request of the mobility management entity of the first mobile communication network.

Furthermore, the present invention relates to a home location entity according to claim 7.

Thereby, it is advantageously possible to provide the mobile management entity of the visited first mobile communication network with all necessary information indicating whether a certain communication service is allowed during roaming or not, so that the mobile management entity of the visited first mobile communication networks is able to decide autonomously if signaling traffic with a certain APN is worth routing to the gateway in the second mobile communication network. If not, the corresponding request is rejected and unnecessary and useless traffic is avoided in this manner. Preferably, the access point name configuration identifier comprises the above mentioned list of several mobile communication networks and/or of several access point names in order to indicate individually in which mobile communication networks apart from the second mobile communication network a certain access point name is allowed or not allowed to be used by the user equipment.

The home location entity is particularly configured such that the access point name configuration identifier is transmitted together with or as part of an insert-subscriber-data message sent from the home location entity to the mobility management entity of the first mobile communication network, in particular initiated by an update location request of the mobility management entity of the first mobile communication network.

Furthermore, the present invention relates to a mobility management entity according to claim 9.

Advantageously, the mobility management entity comprises a functionality of interpreting the received access point name configuration identifier and either to block or to try to establish the requested network connection to the gateway in the second mobile communication network in depending on whether the interpretation of the access point name configuration identifier results in that the access point name is allowed or not allowed while roaming of the user equipment in the first mobile communication network. Preferably, the mobility management entity is configured such that the mobility management entity rejects the requested network connection, in case that the access point name configuration identifier indicates that the corresponding access point name is not allowed for the user equipment in the first mobile communication network.

Furthermore, the present invention relates to a system according to claim 11.

Additionally, the present invention relates to a program according to claim 12.

Additionally, the present invention further relates a computer program product according to claim 13.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

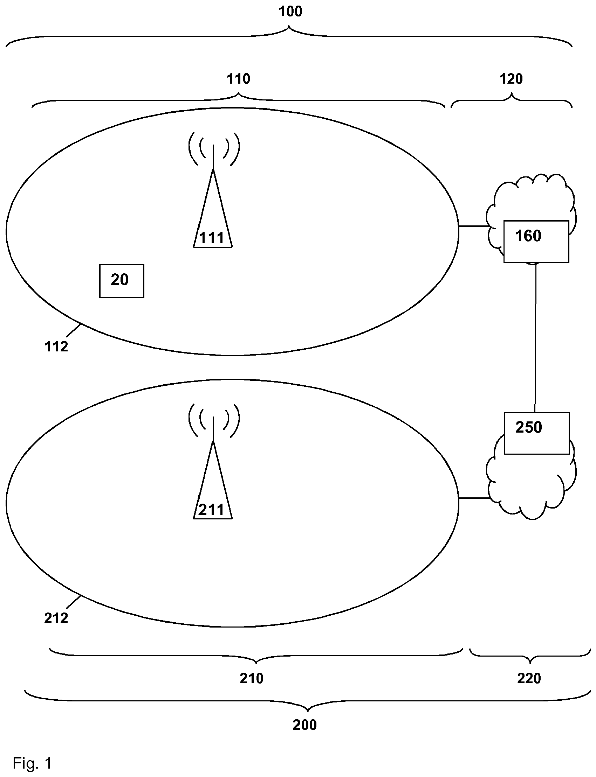

**Figure 1** schematically illustrates a system, a home location entity and a mobility management entity for managing communication services of a roaming user equipment in a visited first mobile communication network according to an exemplary embodiment of the present invention, wherein the system, the home location entity and the mobility management system together perform a method for managing communication services of a roaming user equipment in a visited first mobile communication network according to an exemplary embodiment of the present invention.

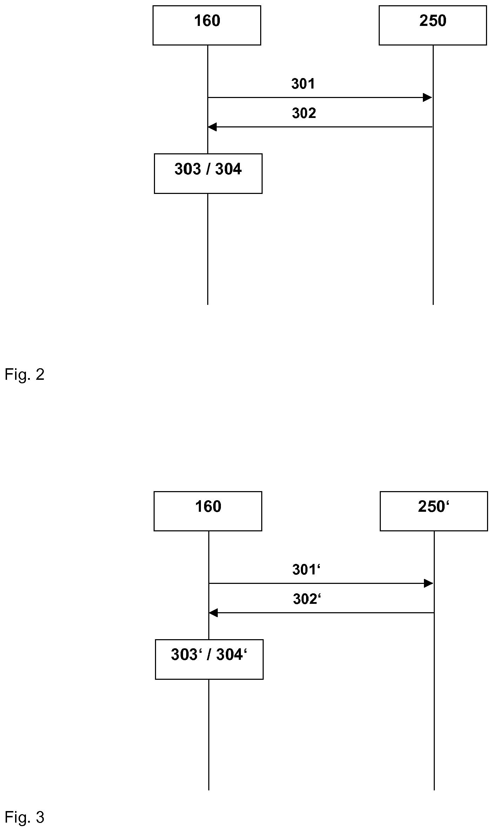

**Figure 2** schematically illustrates a communication diagram according to the present invention and especially according to the inventive method.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a system performing a method for managing communication services of a roaming user equipment 20 in a visited first mobile communication network 100 is illustrated.

The system comprises a first mobile communication network 100 comprising a first radio access network 110 and a first core network 120. In the current example of figure 1, a plurality of user equipments 20, 120, 220 are located within the coverage area 112 of a first base station entity 111, especially a first eNodeB 111, of the first radio access network 110 of the first mobile communication network 100. The first mobile communication network 100 is configured to provide communication services - for example Internet services or Internet multimedia subsystem (IMS) services - to one of the user equipments 20, 120, 220 or to all of the plurality of user equipments 20, 120, 220 via the first base station entity 111 (i.e. the first eNodeB 111) of the first radio access network 110. The first core network 120 of the first mobile communication network 100 comprises at least one mobility management entity (MME or SGSN (Serving GPRS Support node)) 160. The at least one mobility management entity 160 is configured to receive downlink data packets from an upstream source and to transmit uplink data packets towards an upstream destination, wherein the upstream source and upstream destination especially comprises a plurality of packet data network gateways.

The system shown in figure 1 furthermore comprises a second mobile communication network 200 comprising a second radio access network 210 and a second core network 220. The second mobile communication network 200 is configured to provide communication services - for example Internet services or Internet multimedia subsystem (IMS) services - to user equipments located within the coverage area 212 of a second base station entity 211, especially a second eNodeB 211, of the second radio access network 210. The second core network 220 of the second mobile communication network 200 comprises a home location entity 250. The home location entity 250 comprises the functionality of a home subscriber server (HSS) or a home location register (HLR) and Authentication center (AuC). The home subscriber entity 250 contains subscription-related information (subscriber profiles), performs authentication and authorization of the user of the corresponding user equipment 20, and can provide information about the subscriber's location and IP information.

In the present example, a certain user equipment 20 is located within the coverage area 112 of the first mobile communication network 100. The second mobile communication network 200 is the home mobile communication network 200 for this specific user equipment 20. Consequently, the first mobile communication network 100 is a so-called visited mobile communication network 100, e.g. provided by a different network operator, and visited by the "roaming" user equipment 20. The so-called roaming functionality ensures that the user equipment 20 is kept connected to its home second mobile communication network 200 without breaking the connection while or after leaving the coverage area 212 of the second base station entity 211 and entering the coverage area 112 if the first base station entity 111. Consequently, the user equipment 20 is still able to send and receive voice calls, send and receive data, and/or access other services, including home data services, when travelling outside the coverage area 212 of the home mobile communication network 200 by means of using the visited mobile communication network 100.

A network node serving as the home location entity 250 of the second mobile communication network 200 (serving as home communication network to the user equipment 20 roaming in the first mobile communication network 100) interacts with a network node serving as the mobility management entity 160 of the first mobile communication network 100 (serving as visited mobile communication network 100 to this considered user equipment 20).

If user equipment 20 requests a network connection to a certain gateway in the second mobile communication network 200 in order to use a specific communication services, e.g. VoLTE (Voice over IP over LTE), a so called predefined Access Point Name (APN) is used. The communication services use these Access Point Names in the IP Multimedia Subsystem (IPS) for signaling traffic and in order to establish the network connection for a certain communication service.

In the present example, the roaming user equipment 20 requests a network connection for a certain communication service while roaming in the visited first mobile communication network 100 and not being directly connected to its home second mobile communication network 200, the signaling traffic from the user equipment 20 is travelling from the visited first mobile communication network 100 towards the home second mobile communication network 200 in order to reach the gateway in the home second mobile communication network 200 with the corresponding Access Point Name. If an operator wants to have certain services restricted while roaming for the subscribers, this will be controlled by rules (e.g. by policy and charging rules, PCRF) on the gateway in the home second mobile communication network 200 based in the mobile network code (MNC) and the mobile country code (MCC) or even local configurations on the gateway to block or just drop the packets of the requested service for the user equipment while roaming.

In the prior art, the mobility management entity (MME or SGSN (Serving GPRS Support node)) of the visited first mobile communication network 100 does not have any information, whether the communication service requested by the roaming user equipment 20 is allowed and will be supported by the gateway in the home second mobile communication network 200 while roaming or not. Consequently, signaling traffic from the user equipment is over and over again communicated from the visited first mobile communication network 100 to the home second mobile communication network 200, even if the packets of the requested services will only be dropped by the gateway in the home first mobile communication network 100 because the requested service is not allowed while roaming and therefore blocked.

In the present example, the home location entity 250 provides the mobility management entity 160 with an access point configuration identifier for the user equipment 20. The access point configuration identifier comprises at least a list of Access Point Names and for each Access Point Name an admission parameter in order to inform the mobility management entity 160 which Access Point Names are allowed while roaming, in general, or while roaming in the first mobile communication network 100.

If the admission parameter of an Access Point Name of the communication service requested by the roaming user equipment indicates that this Access Point Name is not allowed while roaming, already the mobility management entity 160 of the visited first mobile communication network 100 restricts the user equipment 20 to connect with the Access Point Name. In this way, unnecessary and useless signaling and charges in the second mobility network 200 are avoided. In particular, unnecessary signaling on the target gateway in the second mobility network 200 as well as extra charges caused by the unnecessary signaling routed via the visited first mobile communication network 100 to the second mobile communication network 200 can be prevented.

Preferably, the admission parameter for a certain Access Point Name can take one of three values: 1. "Allowed" which means that the Access Point Name is allowed to be user when roaming, 2. "Not-Allowed" which means that the Access Point Name is not allowed to be used when roaming, 3. "Limited-Allowed" which means that the Access Point Name is allowed to be used in specific locations (MNC-MCC values) only. Particularly preferably, the admission parameter is realized as PDP- (Packet Data Protocol) context flag.

Preferably, the access point configuration identifier comprises also country codes (MNC-MCC values) for the Access Point Names indicated with an admission parameter "Limited-Allowed", so that the mobility management entity 160 is able to figure out in which countries the Access Point Name is allowed and in which countries the Access Point Name is not allowed. In this case, the access point configuration identifier comprises a parameter "restricted locations" for each Access Point Name, wherein the parameter "restricted locations" comprises country-codes of those locations, in which use of the corresponding Access Point Name is not allowed.

The access point name configuration identifier is transmitted from the home location entity 250 to the mobility management entity 160 within the Update Location Answer (ULA) or the Insert-Subscriber-Data message sent from the home location entity 250 of the home second mobile communication network 200 to the mobility management entity 160 of the visited first mobile communication network 100 during a roaming case.

In figure 2, a communication diagram according to the present invention and especially according to the inventive method is schematically illustrated using the example of 2G/3G telecommunication networks.

The mobility management entity 160 of the visited first mobile communication network 100 sends an update location request 301 for the user equipment 20 roaming in the first mobile communication network 100 to the home location entity 250 (providing the functionality of a Home Location Register (HLR) of the second mobile communication network 200 being the home mobile communication network for the user equipment 20. The home location entity 250 answers with Insert-Subscriber-Data 302. The Insert Subscriber Data 302 contains the access point name configuration identifier. In the following, the access point name configuration identifier is also referred to as "GPRS-Subscription-Data". The GPRS-Subscription-Data contains a list of a PDP-contexts the user has subscribed to. In the present example, the user equipment 20 uses the Access Point Name "APN1" and the GPRS Subscription Data (in particular the PDP-context information) comprises the admission parameter. In the present example, the admission parameter (also referred to as flag indicator) for "APN1" has the value "Allowed". In this case, the mobility management entity 160 continues processing and allows the user equipment 20 to connect with "APN1" 303.

If the user equipment 20 uses the Access Point Name "APN1" and the GPRS Subscription Data indicates that the admission parameter for "APN1" has the value "Not-Allowed", the mobility management entity 160 continue to process the next APN configuration and rejects the user equipment 20 to connect with "APN1" 303.

If the user equipment 20 uses the Access Point Name "APN1" and the GPRS Subscription Data indicates that the admission parameter for "APN1" has the value "Limited-Allowed", the mobility management entity 160 checks also the parameter "Restricted Locations" in the GPRS Subscription Data in order to find out if the local MNC-MCC is contained in the list of country codes of the parameter "Restricted-Locations" 304. If the local MNC-MCC exists in the list of country codes, the Access Point Name is not allowed in the local mobile communication network 100 for the user equipment 20 and the mobility management entity 160 rejects the connection with "APN1" 303. If the local MNC-MCC does not exist in the list of country codes, the mobility management entity 160 continues processing and allows the user equipment 20 to connect with "APN1" 303.

In figure 3, a communication diagram according to the present invention and especially according to the inventive method is schematically illustrated using the example of 4G telecommunication networks.

In this example, the home location entity 250' is a Home Subscriber Server (HSS) comprising Attribute-Value-Pairs (AVP) named "Subscription Data" which includes all Access Point Names (APN) allowed to be used by the user in the AVP named "APN configuration profile". This "APN configuration profile" contains one or more "APN configuration" describing the configuration of each single Access Point Name.

According to the present invention, the APN configuration profile comprises the access point name configuration identifier indicating whether the respective Access Point Name is allowed (admission parameter = "Allowed)) for roaming or not (admission parameter = "Not-Allowed"), as explained above. The APN configuration profile furthermore comprises a parameter "Restricted-Locations" containing all MNC-MCC values of the restricted mobile communication networks. The parameter "Restricted-Locations" only exists for Access Point Names having an admission parameter "Limited-Allowed".

The mobility management entity 160' of the visited first mobile communication network 100 sends an update location request 301' for the user equipment 20 roaming in the first mobile communication network 100 to the home location entity 250' (providing the functionality of the Home Subscriber Server (HSS)) of the second mobile communication network 200 being the home mobile communication network for the user equipment 20. The home location entity 250 answers with APN configuration profile 302'. APN configuration profile 302' contains the access point name configuration identifier. In the present example, the user equipment 20 uses the Access Point Name "APN1" and the respective APN configuration profile 302' indicates that the admission parameter for "APN1" has the value "Allowed". In this case, the mobility management entity 160 is allowed to grant the user equipment 20 the connectivity using the APN1 and the mobility management entity 160 store this APN configuration or replace former stored APN configurations.

If the user equipment 20 uses the Access Point Name "APN1" and the APN configuration profile 302' an admission parameter for "APN1" having the value "Not-Allowed", the mobility management entity 160 ignores the whole APN configuration for "APN1" and consider that it has never been sent by the Home Subscriber Server and continues to process the next APN configuration 303'.

If the user equipment 20 uses the Access Point Name "APN1" and the PN configuration profile 302' comprises an admission parameter for "APN1" having the value "Limited-Allowed", the mobility management entity 160 checks also the parameter "Restricted Locations" in the APN configuration profile 302' in order to find out if the local MNC-MCC is contained in the list of country codes of the parameter "Restricted-Locations" 304'. If the local MNC-MCC exists in the list of country codes, the mobility management entity 160 ignores the APN configuration with "APN1" 303'. If the local MNC-MCC does not exist in the list of country codes, the mobility management entity 160 continues processing and allows the user equipment 20 to connect with "APN1" 303'.

## Claims

1. Method for managing communication services of a roaming user equipment (20) in a visited first mobile communication network (100),
wherein the user equipment (20) being connected to the first mobile communication network (100) requests a network connection to a gateway in a second mobile communication network (200) using an access point name for one or several certain communication services,
wherein a mobility management entity (160) of the first mobile communication network (100) communicates with a home location entity (250) of the second mobile communication network (200) in order to establish the requested network connection,
wherein the home location entity (250) of the second mobile communication network (200) provides the mobility management entity (160) of the first mobile communication network (100) with an access point name configuration identifier for the user equipment (20), the access point name configuration identifier indicating whether the use of the access point name is allowed for the user equipment (20) in the first mobile communication network (100), **characterized in that** the access point name configuration identifier comprises a list of several mobile communication networks and/or a list of several access point names in order to indicate individually in which mobile communication networks apart from the second mobile communication network (200) a certain access point name is allowed or not allowed to be used by the user equipment (20).

2. Method according to claim 1, wherein the second mobile communication network (200) is acting as a home mobile communication network for the user equipment (20) roaming in the visited first mobile communication network (100).

3. Method according to any one of the preceding claims, wherein the mobility management entity (160) establishes the requested network connection, if the access point name configuration identifier indicates that the corresponding access point name is allowed for the user equipment (20) in the first mobile communication network (100).

4. Method according to any one of the preceding claims, wherein the mobility management entity (160) rejects the requested network connection, if the access point name configuration identifier indicates that the corresponding access point name is not allowed for the user equipment (20) in the first mobile communication network (100).

5. Method according to any one of the preceding claims, wherein the access point name configuration identifier indicates whether the access point name is allowed or not allowed to be used by the user equipment (20) outside the second mobile communication network (200) and/or wherein the access point name configuration identifier indicates individually in which mobile communication networks apart from the second mobile communication network (200) the access point name is allowed or not allowed to be used by the user equipment (20).

6. Method according to any of the preceding claims, wherein the access point name configuration identifier is transmitted together with or as part of an insert-subscriber-data message sent from the home location entity (250) of the second mobile communication network (200) to the mobility management entity (160) of the first mobile communication network (100), in particular initiated by an update location request of the mobility management entity (160) of the first mobile communication network (100).

7. Home location entity (250) for managing communication services of a roaming user equipment (20) in a visited first mobile communication network (100),
wherein the home location entity (250) is part of a second mobile communication network (200),
wherein the second mobile communication network (200) is acting as a home mobile communication network for the user equipment (20) roaming in the visited first mobile communication network (100),
wherein the home location entity (250) is configured such that, in case that a mobility management entity (160) of the first mobile communication network (100) communicates with the home location entity (250) in order to establish a requested network connection - the requested network connection being requested by the user equipment (20) connected to the first mobile communication network (100) and requesting a network connection to a gateway in the second mobile communication network (200) using an access point name for one or several certain communication services -, the home location entity (250) transmits an access point name configuration identifier to the mobility management entity (160) indicating whether the use of the access point name is allowed for the user equipment (20) in the first mobile communication network (100), **characterized in that** the access point name configuration identifier comprises a list of several mobile communication networks and/or a list of several access point names in order to indicate individually in which mobile communication networks apart from the second mobile communication network (200) a certain access point name is allowed or not allowed to be used by the user equipment (20).

8. Home location entity (250) according to claim 7, wherein the home location entity (250) is configured such that the access point name configuration identifier is transmitted together with or as part of an insert-subscriber-data message sent from the home location entity (250) to the mobility management entity (160) of the first mobile communication network (100), in particular initiated by an update location request of the mobility management entity (160) of the first mobile communication network (100).

9. Mobility management entity (160) for managing communication services of a roaming user equipment (20) in a visited first mobile communication network (100),
wherein the mobility management entity (160) is part of the first mobile communication network (100),
wherein the mobility management entity (160) is configured such that a requested network connection - the requested network connection being requested by the user equipment (20) connected to the first mobile communication network (100) and requesting a network connection to a gateway in the second mobile communication network (200) using an access point name for one or several certain communication services - is allowed, in case that an access point name configuration identifier, received from a home location entity (250) of the second mobile communication network (200), indicates that the corresponding access point name is allowed for the user equipment (20) in the first mobile communication network (100), **characterized in that** the access point name configuration identifier comprises a list of several mobile communication networks and/or a list of several access point names in order to indicate individually in which mobile communication networks apart from the second mobile communication network (200) a certain access point name is allowed or not allowed to be used by the user equipment (20).

10. Mobility management entity (160) according to claim 9, wherein the mobility management entity (160) is configured such that the mobility management entity (160) rejects the requested network connection, in case that the access point name configuration identifier indicates that the corresponding access point name is not allowed for the user equipment (20) in the first mobile communication network (100).

11. System for managing communication services of a roaming user equipment (20) in a visited first mobile communication network (100),
wherein the system comprises the first mobile communication network (100), a second mobile communication network (200) and the user equipment (20),
wherein the user equipment (20) being connected to the first mobile communication network (100) requests a network connection to a gateway in a second mobile communication network (200) using an access point name for one or several certain communication services,
wherein the second mobile communication network (200) is acting as a home communication network for the user equipment (20) roaming in the visited first mobile communication network (100),
wherein a mobility management entity (160) of the first mobile communication network (100) communicates with a home location entity (250) of the second mobile communication network (200) in order to establish the requested network connection,
wherein the mobile communication network system is configured such that the home location entity (250) of the second mobile communication network (200) provides the mobility management entity (160) of the first mobile communication network (100) with an access point name configuration identifier for the user equipment (20) indicating whether the use of the access point name is allowed for the user equipment (20) in the first mobile communication network (100) and
wherein the mobile communication network system is configured such that the mobility management entity (160) allows the requested network connection, in case that the access point name configuration identifier indicates that the corresponding access point name is allowed for the user equipment (20) in the first mobile communication network (100), **characterized in that** the access point name configuration identifier comprises a list of several mobile communication networks and/or a list of several access point names in order to indicate individually in which mobile communication networks apart from the second mobile communication network (200) a certain access point name is allowed or not allowed to be used by the user equipment (20).

12. Program comprising a computer readable program code which, when executed in part on a first network node, providing the functionalities of a mobility management entity (160), and in part on a second network node, providing the functionalities of a home location entity (250), causes the network nodes of the mobile communication network (100, 200) to perform a method according to any one of claims 1 to 6.

13. Computer program product for managing communication services of a roaming user equipment (20) in a visited first mobile communication network (100), the computer program product comprising a computer program stored on a storage medium, the computer program comprising program code which, when executed in part on a first network node, providing the functionalities of a mobility management entity (160), and in part on a second network node, providing the functionalities of a home location entity (250), causes the network nodes of the mobile communication network (100, 200) to perform a method according to any one of claims 1 to 6.

## Patentansprüche

1. Verfahren zum Verwalten von Kommunikationsdiensten eines roamenden Benutzerendgerätes (20) in einem besuchten ersten Mobilkommunikationsnetz (100),
wobei das Benutzerendgerät (20), das mit dem ersten Mobilkommunikationsnetz (100) verbunden ist, eine Netzverbindung zu einem Gateway in einem zweiten Mobilkommunikationsnetz (200) unter Verwendung eines Zugangspunktnamens für einen oder mehrere bestimmte Kommunikationsdienste anfordert,
wobei eine Mobilitätsmanagemententität (160) des ersten Mobilkommunikationsnetzes (100) mit einer Heimatstandortentität (250) des zweiten Mobilkommunikationsnetzes (200) kommuniziert, um die anforderte Netzverbindung herzustellen,
wobei die Heimatstandortentität (250) des zweiten Mobilkommunikationsnetzes (200) an die Mobilitätsmanagemententität (160) des ersten Mobilkommunikationsnetzes (100) einen Zugangspunktnamen-Konfigurationsidentifikator für das Benutzerendgerät (20) übermittelt, wobei der Zugangspunktnamen-Konfigurationsidentifikator anzeigt, ob die Verwendung des Zugangspunktnamens für das Benutzerendgerät (20) in dem ersten Mobilkommunikationsnetz (100) zugelassen ist, **dadurch gekennzeichnet, dass** der Zugangspunktnamen-Konfigurationsidentifikator eine Liste von mehreren Mobilkommunikationsnetzen und/oder eine Liste von mehreren Zugangspunktnamen umfasst, um einzeln anzugeben, in welchen Mobilkommunikationsnetzen, abgesehen von dem zweiten Mobilkommunikationsnetz (200), ein bestimmter Zugangspunktname durch das Benutzerendgerät (20) verwendet werden darf oder nicht verwendet werden darf.

2. Verfahren nach Anspruch 1, wobei das zweite Mobilkommunikationsnetz (200) als ein Heimat-Mobilkommunikationsnetz für das Benutzerendgerät (20), das in dem besuchten ersten Mobilkommunikationsnetz (100) roamt, dient.

3. Verfahren nach einem der vorangehenden Ansprüche, wobei die Mobilitätsmanagemententität (160) die anforderte Netzverbindung herstellt, wenn der Zugangspunktnamen-Konfigurationsidentifikator anzeigt, dass der entsprechende Zugangspunktname für das Benutzerendgerät (20) in dem ersten Mobilkommunikationsnetz (100) zugelassen ist.

4. Verfahren nach einem der vorangehenden Ansprüche, wobei die Mobilitätsmanagemententität (160) die anforderte Netzverbindung ablehnt, wenn der Zugangspunktnamen-Konfigurationsidentifikator anzeigt, dass der entsprechende Zugangspunktname nicht für das Benutzerendgerät (20) in dem ersten Mobilkommunikationsnetz (100) zugelassen ist.

5. Verfahren nach einem der vorangehenden Ansprüche, wobei der Zugangspunktnamen-Konfigurationsidentifikator anzeigt, ob der Zugangspunktname durch das Benutzerendgerät (20) außerhalb des zweiten Mobilkommunikationsnetzes (200) verwendet werden darf oder nicht verwendet werden darf, und/oder wobei der Zugangspunktnamen-Konfigurationsidentifikator einzeln anzeigt, in welchen Mobilkommunikationsnetzen, abgesehen von dem zweiten Mobilkommunikationsnetz (200), der Zugangspunktname durch das Benutzerendgerät (20) verwendet werden darf oder nicht verwendet werden darf.

6. Verfahren nach einem der vorangehenden Ansprüche, wobei der Zugangspunktnamen-Konfigurationsidentifikator zusammen mit einer, oder als Teil einer, Teilnehmerdaten-einfügen-Nachricht gesendet wird, die von der Heimatstandortentität (250) des zweiten Mobilkommunikationsnetzes (200) an die Mobilitätsmanagemententität (160) des ersten Mobilkommunikationsnetzes (100) gesendet wird, insbesondere nach einer Initiierung durch eine Standortaktualisierungs-Anforderung der Mobilitätsmanagemententität (160) des ersten Mobilkommunikationsnetzes (100).

7. Heimatstandortentität (250) zum Verwalten von Kommunikationsdiensten eines roamenden Benutzerendgerätes (20) in einem besuchten ersten Mobilkommunikationsnetz (100),
wobei die Heimatstandortentität (250) Teil eines zweiten Mobilkommunikationsnetzes (200) ist,
wobei das zweite Mobilkommunikationsnetz (200) als ein Heimat-Mobilkommunikationsnetz für das Benutzerendgerät (20), das in dem besuchten ersten Mobilkommunikationsnetz (100) roamt, dient,
wobei die Heimatstandortentität (250) so konfiguriert ist, dass für den Fall, dass eine Mobilitätsmanagemententität (160) des ersten Mobilkommunikationsnetzes (100) mit der Heimatstandortentität (250) kommuniziert, um eine anforderte Netzverbindung herzustellen - wobei die anforderte Netzverbindung, die durch das Benutzerendgerät (20) anfordert wird, das mit dem ersten Mobilkommunikationsnetz (100) verbunden ist und eine Netzverbindung zu einem Gateway in dem zweiten Mobilkommunikationsnetz (200) unter Verwendung eines Zugangspunktnamens für einen oder mehrere bestimmte Kommunikationsdienste anfordert -, die Heimatstandortentität (250) einen Zugangspunktnamen-Konfigurationsidentifikator an die Mobilitätsmanagemententität (160) sendet, der anzeigt, ob die Verwendung des Zugangspunktnamens für das Benutzerendgerät (20) in dem ersten Mobilkommunikationsnetz (100) zugelassen ist, **dadurch gekennzeichnet, dass** der Zugangspunktnamen-Konfigurationsidentifikator eine Liste von mehreren Mobilkommunikationsnetzen und/oder eine Liste von mehreren Zugangspunktnamen umfasst, um einzeln anzugeben, in welchen Mobilkommunikationsnetzen, abgesehen von dem zweiten Mobilkommunikationsnetz (200), ein bestimmter Zugangspunktname durch das Benutzerendgerät (20) verwendet werden darf oder nicht verwendet werden darf.

8. Heimatstandortentität (250) nach Anspruch 7, wobei die Heimatstandortentität (250) so konfiguriert ist, dass der Zugangspunktnamen-Konfigurationsidentifikator zusammen mit einer, oder als Teil einer, Teilnehmerdaten-einfügen-Nachricht gesendet wird, die von der Heimatstandortentität (250) an die Mobilitätsmanagemententität (160) des ersten Mobilkommunikationsnetzes (100) gesendet wird, insbesondere nach einer Initiierung durch eine Standortaktualisierungs-Anforderung der Mobilitätsmanagemententität (160) des ersten Mobilkommunikationsnetzes (100).

9. Mobilitätsmanagemententität (160) zum Verwalten von Kommunikationsdiensten eines roamenden Benutzerendgerätes (20) in einem besuchten ersten Mobilkommunikationsnetz (100),
wobei die Mobilitätsmanagemententität (160) Teil des ersten Mobilkommunikationsnetzes (100) ist, wobei die Mobilitätsmanagemententität (160) so konfiguriert ist, dass eine anforderte Netzverbindung - wobei die anforderte Netzverbindung, die durch das Benutzerendgerät (20) anfordert wird, das mit dem ersten Mobilkommunikationsnetz (100) verbunden ist und eine Netzverbindung zu einem Gateway in dem zweiten Mobilkommunikationsnetz (200) unter Verwendung eines Zugangspunktnamens für einen oder mehrere bestimmte Kommunikationsdienste anfordert - zulässig ist, falls ein Zugangspunktnamen-Konfigurationsidentifikator, der von einer Heimatstandortentität (250) des zweiten Mobilkommunikationsnetzes (200) kommend empfangen wird, anzeigt, dass der entsprechende Zugangspunktname für das Benutzerendgerät (20) in dem ersten Mobilkommunikationsnetz (100) zugelassen ist, **dadurch gekennzeichnet, dass** der Zugangspunktnamen-Konfigurationsidentifikator eine Liste von mehreren Mobilkommunikationsnetzen und/oder eine Liste von mehreren Zugangspunktnamen umfasst, um einzeln anzuzeigen, in welchen Mobilkommunikationsnetzen, abgesehen von dem zweiten Mobilkommunikationsnetz (200), ein bestimmter Zugangspunktname durch das Benutzerendgerät (20) verwendet werden darf oder nicht verwendet werden darf.

10. Mobilitätsmanagemententität (160) nach Anspruch 9, wobei die Mobilitätsmanagemententität (160) so konfiguriert ist, dass die Mobilitätsmanagemententität (160) die anforderte Netzverbindung ablehnt, falls der Zugangspunktnamen-Konfigurationsidentifikator anzeigt, dass der entsprechende Zugangspunktname nicht für das Benutzerendgerät (20) in dem ersten Mobilkommunikationsnetz (100) zugelassen ist.

11. System zum Verwalten von Kommunikationsdiensten eines roamenden Benutzerendgerätes (20) in einem besuchten ersten Mobilkommunikationsnetz (100),
wobei das System das erste Mobilkommunikationsnetz (100), ein zweites Mobilkommunikationsnetz (200) und das Benutzerendgerät (20) umfasst,
wobei das Benutzerendgerät (20), das mit dem ersten Mobilkommunikationsnetz (100) verbunden ist, eine Netzverbindung zu einem Gateway in einem zweiten Mobilkommunikationsnetz (200) unter Verwendung eines Zugangspunktnamens für einen oder mehrere bestimmte Kommunikationsdienste anfordert,
wobei das zweite Mobilkommunikationsnetz (200) als ein Heimat-Kommunikationsnetz für das Benutzerendgerät (20) dient, das in dem besuchten ersten Mobilkommunikationsnetz (100) roamt,
wobei eine Mobilitätsmanagemententität (160) des ersten Mobilkommunikationsnetzes (100) mit einer Heimatstandortentität (250) des zweiten Mobilkommunikationsnetzes (200) kommuniziert, um die anforderte Netzverbindung herzustellen,
wobei das Mobilkommunikationsnetz-System so konfiguriert ist, dass die Heimatstandortentität (250) des zweiten Mobilkommunikationsnetzes (200) an die Mobilitätsmanagemententität (160) des ersten Mobilkommunikationsnetzes (100) einen Zugangspunktnamen-Konfigurationsidentifikator für das Benutzerendgerät (20) übermittelt, der anzeigt, ob die Verwendung des Zugangspunktnamens für das Benutzerendgerät (20) in dem ersten Mobilkommunikationsnetz (100) zugelassen ist, und wobei das Mobilkommunikationsnetz-System so konfiguriert ist, dass die Mobilitätsmanagemententität (160) die anforderte Netzverbindung zulässt, falls der Zugangspunktnamen-Konfigurationsidentifikator anzeigt, dass der entsprechende Zugangspunktname für das Benutzerendgerät (20) in dem ersten Mobilkommunikationsnetz (100) zugelassen ist, **dadurch gekennzeichnet, dass** der Zugangspunktnamen-Konfigurationsidentifikator eine Liste von mehreren Mobilkommunikationsnetzen und/oder eine Liste von mehreren Zugangspunktnamen umfasst, um einzeln anzugeben, in welchen Mobilkommunikationsnetzen, abgesehen von dem zweiten Mobilkommunikationsnetz (200), ein bestimmter Zugangspunktname durch das Benutzerendgerät (20) verwendet werden darf oder nicht verwendet werden darf.

12. Programm, das einen computerlesbaren Programmcode umfasst, der, wenn er teilweise in einem ersten Netzknoten ausgeführt wird, der die Funktionen einer Mobilitätsmanagemententität (160) übernimmt, und teilweise in einem zweiten Netzknoten ausgeführt wird, der die Funktionen einer Heimatstandortentität (250) übernimmt, den Netzknoten des Mobilkommunikationsnetzes (100, 200) veranlasst, ein Verfahren nach einem der Ansprüche 1 bis 6 auszuführen.

13. Computerprogrammprodukt zum Verwalten von Kommunikationsdiensten eines roamenden Benutzerendgerätes (20) in einem besuchten ersten Mobilkommunikationsnetz (100), wobei das Computerprogrammprodukt ein Computerprogramm umfasst, das auf einem Speichermedium gespeichert ist, wobei das Computerprogramm Programmcode umfasst, der, wenn er teilweise in einem ersten Netzknoten ausgeführt wird, der die Funktionen einer Mobilitätsmanagemententität (160) übernimmt, und teilweise in einem zweiten Netzknoten ausgeführt wird, der die Funktionen einer Heimatstandortentität (250) übernimmt, den Netzknoten des Mobilkommunikationsnetzes (100, 200) veranlasst, ein Verfahren nach einem der Ansprüche 1 bis 6 auszuführen.

## Revendications

1. Procédé permettant de gérer des services de communication d'un équipement d'utilisateur itinérant (20) dans un premier réseau de communication mobile visité (100),
dans lequel l'équipement d'utilisateur (20) étant connecté au premier réseau de communication mobile (100) demande une connexion réseau à une passerelle dans un second réseau de communication mobile (200) à l'aide d'un nom de point d'accès pour un ou plusieurs de certains services de communication,
dans lequel une entité de gestion de mobilité (160) du premier réseau de communication mobile (100) communique avec une entité de localisation dans le domaine de rattachement (250) du second réseau de communication mobile (200) afin d'établir la connexion réseau demandée, dans lequel l'entité de localisation dans le domaine de rattachement (250) du second réseau de communication mobile (200) fournit à l'entité de gestion de mobilité (160) du premier réseau de communication mobile (100) un identificateur de configuration de nom de point d'accès pour l'équipement d'utilisateur (20), l'identificateur de configuration de nom de point d'accès indiquant si l'utilisation du nom de point d'accès est autorisée pour l'équipement d'utilisateur (20) dans le premier réseau de communication mobile (100), **caractérisé en ce que** l'identificateur de configuration de nom de point d'accès comprend une liste de plusieurs réseaux de communication mobile et/ou une liste de plusieurs noms de points d'accès afin d'indiquer individuellement les réseaux de communication mobile, hormis le second réseau de communication mobile (200), dans lesquels l'utilisation d'un certain nom de point d'accès par l'équipement d'utilisateur (20) est autorisée ou non autorisée.

2. Procédé selon la revendication 1, dans lequel le second réseau de communication mobile (200) fait office de réseau de communication mobile de rattachement pour l'équipement d'utilisateur (20) en itinérance dans le premier réseau de communication mobile visité (100).

3. Procédé selon l'une quelconque des revendications précédentes, dans lequel l'entité de gestion de mobilité (160) établit la connexion réseau demandée, si l'identificateur de configuration de nom de point d'accès indique que le nom de point d'accès correspondant est autorisé pour l'équipement d'utilisateur (20) dans le premier réseau de communication mobile (100).

4. Procédé selon l'une quelconque des revendications précédentes, dans lequel l'entité de gestion de mobilité (160) refuse la connexion réseau demandée, si l'identificateur de configuration de nom de point d'accès indique que le nom de point d'accès correspondant n'est pas autorisé pour l'équipement d'utilisateur (20) dans le premier réseau de communication mobile (100).

5. Procédé selon l'une quelconque des revendications précédentes, dans lequel l'identificateur de configuration de nom de point d'accès indique si l'utilisation du nom de point d'accès par l'équipement d'utilisateur (20) est autorisée ou non autorisée à l'extérieur du second réseau de communication mobile (200) et/ou dans lequel l'identificateur de configuration de nom de point d'accès indique individuellement les réseaux de communication mobile, hormis le second réseau de communication mobile (200), dans lesquels l'utilisation du nom de point d'accès par l'équipement d'utilisateur (20) est autorisée ou non autorisée.

6. Procédé selon l'une quelconque des revendications précédentes, dans lequel l'identificateur de configuration de nom de point d'accès est transmis conjointement avec un message d'insertion de données d'abonné ou en tant que partie de ce message envoyé par l'entité de localisation dans le domaine de rattachement (250) du second réseau de communication mobile (200) à l'entité de gestion de mobilité (160) du premier réseau de communication mobile (100), en particulier déclenché par une demande de mise à jour de localisation de l'entité de gestion de mobilité (160) du premier réseau de communication mobile (100).

7. Entité de localisation dans le domaine de rattachement (250) permettant de gérer des services de communication d'un équipement d'utilisateur itinérant (20) dans un premier réseau de communication mobile visité (100),
dans laquelle l'entité de localisation dans le domaine de rattachement (250) fait partie d'un second réseau de communication mobile (200),
dans laquelle le second réseau de communication mobile (200) fait office de réseau de communication mobile de rattachement pour l'équipement d'utilisateur (20) en itinérance dans le premier réseau de communication mobile visité (100),
dans laquelle l'entité de localisation dans le domaine de rattachement (250) est conçue de telle sorte que, dans le cas où une entité de gestion de mobilité (160) du premier réseau de communication mobile (100) communique avec l'entité de localisation dans le domaine de rattachement (250) afin d'établir une connexion réseau demandée - la connexion réseau demandée étant demandée par l'équipement d'utilisateur (20) connecté au premier réseau de communication mobile (100) et demandant une connexion réseau à une passerelle dans le second réseau de communication mobile (200) à l'aide d'un nom de point d'accès pour un ou plusieurs de certains services de communication -, l'entité de localisation dans le domaine de rattachement (250) transmet à l'entité de gestion de mobilité (160) un identificateur de configuration de nom de point d'accès indiquant si l'utilisation du nom de point d'accès est autorisée pour l'équipement d'utilisateur (20) dans le premier réseau de communication mobile (100), **caractérisé en ce que** l'identificateur de configuration de nom de point d'accès comprend une liste de plusieurs réseaux de communication mobile et/ou une liste de plusieurs noms de points d'accès afin d'indiquer individuellement les réseaux de communication mobile, hormis le second réseau de communication mobile (200), dans lesquels l'utilisation d'un certain nom de point d'accès par l'équipement d'utilisateur (20) est autorisée ou non autorisée.

8. Entité de localisation dans le domaine de rattachement (250) selon la revendication 7, dans laquelle l'entité de localisation dans le domaine de rattachement (250) est conçue de telle sorte que l'identificateur de configuration de nom de point d'accès est transmis conjointement avec un message d'insertion de données d'abonné ou en tant que partie de ce message envoyé par l'entité de localisation dans le domaine de rattachement (250) à l'entité de gestion de mobilité (160) du premier réseau de communication mobile (100), en particulier déclenché par une demande de mise à jour de localisation de l'entité de gestion de mobilité (160) du premier réseau de communication mobile (100).

9. Entité de gestion de mobilité (160) permettant de gérer des services de communication d'un équipement d'utilisateur itinérant (20) dans un premier réseau de communication mobile visité (100),
dans laquelle l'entité de gestion de mobilité (160) fait partie du premier réseau de communication mobile (100),
dans laquelle l'entité de gestion de mobilité (160) est conçue de telle sorte qu'une connexion réseau demandée - la connexion réseau demandée étant demandée par l'équipement d'utilisateur (20) connecté au premier réseau de communication mobile (100) et demandant une connexion réseau à une passerelle dans le second réseau de communication mobile (200) à l'aide d'un nom de point d'accès pour un ou plusieurs de certains services de communication - est autorisée dans le cas où un identificateur de configuration de nom de point d'accès, reçu en provenance d'une entité de localisation dans le domaine de rattachement (250) du second réseau de communication mobile (200), indique que le nom de point d'accès correspondant est autorisé pour l'équipement d'utilisateur (20) dans le premier réseau de communication mobile (100), **caractérisé en ce que** l'identificateur de configuration de nom de point d'accès comprend une liste de plusieurs réseaux de communication mobile et/ou une liste de plusieurs noms de points d'accès afin d'indiquer individuellement les réseaux de communication mobile, hormis le second réseau de communication mobile (200), dans lesquels l'utilisation d'un certain nom de point d'accès par l'équipement d'utilisateur (20) est autorisée ou non autorisée.

10. Entité de gestion de mobilité (160) selon la revendication 9, dans laquelle l'entité de gestion de mobilité (160) est conçue de telle sorte que l'entité de gestion de mobilité (160) refuse la connexion réseau demandée, dans le cas où l'identificateur de configuration de nom de point d'accès indique que le nom de point d'accès correspondant n'est pas autorisé pour l'équipement d'utilisateur (20) dans le premier réseau de communication mobile (100).

11. Système permettant de gérer des services de communication d'un équipement d'utilisateur itinérant (20) dans un premier réseau de communication mobile visité (100),
dans lequel le système comprend le premier réseau de communication mobile (100), un second réseau de communication mobile (200) et l'équipement d'utilisateur (20),
dans lequel l'équipement d'utilisateur (20) étant connecté au premier réseau de communication mobile (100) demande une connexion réseau à une passerelle dans un second réseau de communication mobile (200) à l'aide d'un nom de point d'accès pour un ou plusieurs de certains services de communication,
dans lequel le second réseau de communication mobile (200) fait office de réseau de communication de rattachement pour l'équipement d'utilisateur (20) en itinérance dans le premier réseau de communication mobile visité (100),
dans lequel une entité de gestion de mobilité (160) du premier réseau de communication mobile (100) communique avec une entité de localisation dans le domaine de rattachement (250) du second réseau de communication mobile (200) afin d'établir la connexion réseau demandée, dans lequel le système de réseau de communication mobile est conçu de telle sorte que l'entité de localisation dans le domaine de rattachement (250) du second réseau de communication mobile (200) fournit à l'entité de gestion de mobilité (160) du premier réseau de communication mobile (100) un identificateur de configuration de nom de point d'accès pour l'équipement d'utilisateur (20), indiquant si l'utilisation du nom de point d'accès est autorisée pour l'équipement d'utilisateur (20) dans le premier réseau de communication mobile (100) et
dans lequel le système de réseau de communication mobile est conçu de telle sorte que l'entité de gestion de mobilité (160) autorise la connexion réseau demandée, dans le cas où l'identificateur de configuration de nom de point d'accès indique que le nom de point d'accès correspondant est autorisé pour l'équipement d'utilisateur (20) dans le premier réseau de communication mobile (100), **caractérisé en ce que** l'identificateur de configuration de nom de point d'accès comprend une liste de plusieurs réseaux de communication mobile et/ou une liste de plusieurs noms de points d'accès afin d'indiquer individuellement les réseaux de communication mobile, hormis le second réseau de communication mobile (200), dans lesquels l'utilisation d'un certain nom de point d'accès par l'équipement d'utilisateur (20) est autorisée ou non autorisée.

12. Programme comprenant un code de programme lisible par ordinateur qui, lorsqu'il est exécuté en partie sur un premier noeud de réseau assurant les fonctionnalités d'une entité de gestion de mobilité (160), et en partie sur un second noeud de réseau assurant les fonctionnalités d'une entité de localisation dans le domaine de rattachement (250), fait mettre en oeuvre aux noeuds de réseau du réseau de communication mobile (100, 200) un procédé selon l'une quelconque des revendications 1 à 6.

13. Produit-programme informatique permettant de gérer des services de communication d'un équipement d'utilisateur itinérant (20) dans un premier réseau de communication mobile visité (100), le produit-programme informatique comprenant un programme informatique stocké sur un support de stockage, le programme informatique comprenant un code de programme qui, lorsqu'il est exécuté en partie sur un premier noeud de réseau assurant les fonctionnalités d'une entité de gestion de mobilité (160), et en partie sur un second noeud de réseau assurant les fonctionnalités d'une entité de localisation dans le domaine de rattachement (250), fait mettre en oeuvre aux noeuds de réseau du réseau de communication mobile (100, 200) un procédé selon l'une quelconque des revendications 1 à 6.
